# EUROPEAN PATENT APPLICATION

(11) **EP 1 737 168 A1**
(43) Date of publication of application: **27.12.2006**
(21) Application number: 06115594.1
(22) Date of filing: 16.06.2006
(51) Int. Cl.: H04L 12/56

(54) **System, methods, and devices for managing routing within an Autonomous System**

(30) Priority: 09.11.2005 US 270843; 17.08.2005 US 205396; 24.06.2005 US 694117 P
(71) Applicant: AT&T Corp., New York, NY 10013-2412 (US)
(72) Inventor: Caldwell, Donald, Westfield, NJ 07090 (US); Rexford, Jennifer, Floreham Park, NJ 07932 (US); Shaikh, Aman, Summit, NJ 07901 (US); Van der Merwe, Jacobus, New Providence, NJ 07974 (US)
(74) Representative: Asquith, Julian Peter

(57) **Abstract**

Certain exemplary embodiments comprise a method comprising a plurality of activities, comprising: for each of the plurality of routing entities in an AS: obtaining IGP topology information; learning available BGP routes associated with the routing entity; utilizing the available BGP routes and the IGP topology information for all routing entities in the AS, assigning the routing entity a customized routing decision comprising a BGP route; and sending the customized routing decision to the routing entity.

## Description

### Cross Reference to Related Applications

This application is a continuation of, claims priority to, and incorporates by reference in its entirety, US Patent Application Serial No. 11/205,396, filed 17 August 2005, titled "Systems, Methods, and Devices for Managing Routing", and claims priority to, and incorporates by reference in its entirety US Provisional Patent Application Serial No. 60/694,117, filed 24 June 2005, and titled "Systems, Devices, and Methods for Routing Control".

### Brief Description of the Drawings

A wide variety of potential embodiments will be more readily understood through the following detailed description of certain exemplary embodiments, with reference to the accompanying exemplary drawings in which:

**FIG. 1** is a block diagram of an exemplary embodiment of a system 1000;

**FIG. 2** is a block diagram of an exemplary embodiment of a system 2000;

**FIG. 3** is a block diagram of an exemplary embodiment of a system 3000;

**FIG. 4** is an exemplary timeline 4000 illustrating convergence to steady state;

**FIG. 5** is a flowchart of an exemplary embodiment of a method 5000;

**FIG. 6** is a diagram of exemplary embodiment of a data structures 6000;

**FIG. 7** is a flowchart of an exemplary embodiment of a method 7000;

**FIG. 8** is an exemplary graph 8000 of an illustrative data set;

**FIG. 9** is an exemplary graph 9000 of an illustrative data set;

**FIG. 10** is an exemplary graph 10000 of an illustrative data set;

**FIG. 11** is an exemplary graph 11000 of an illustrative data set;

**FIG. 12** is a block diagram of an exemplary embodiment of a system 12000;

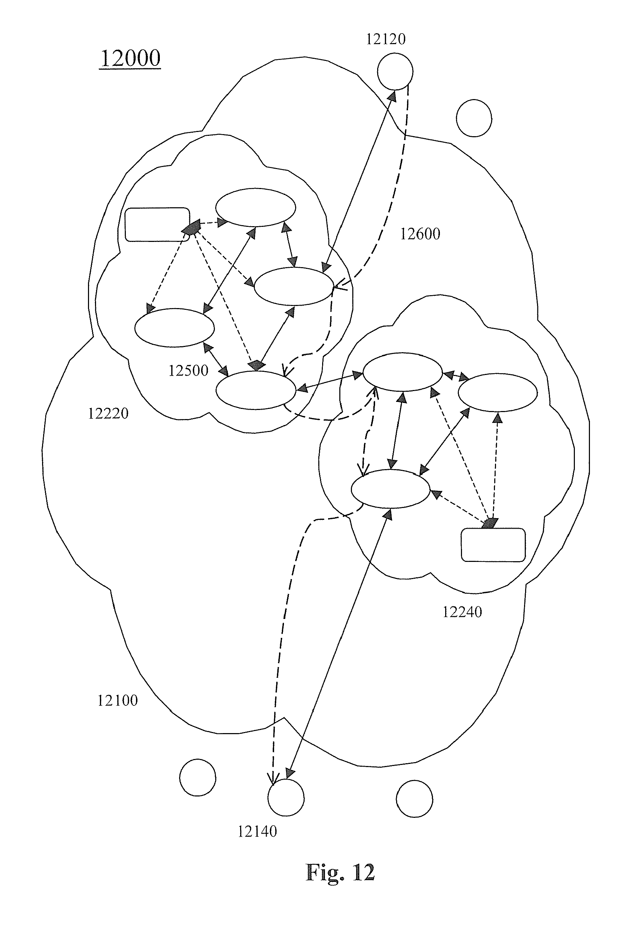

**FIG. 12** is a block diagram of an exemplary embodiment of a system 12000;

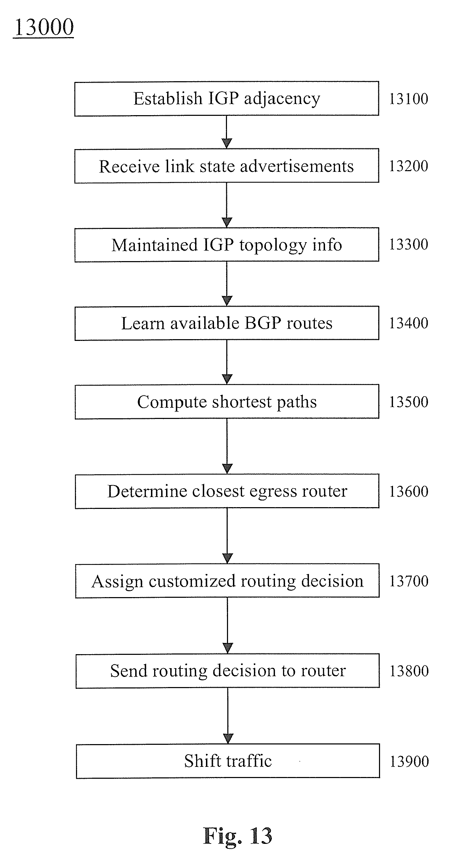

**FIG. 13** is a flowchart of an exemplary embodiment of a method 13000; and

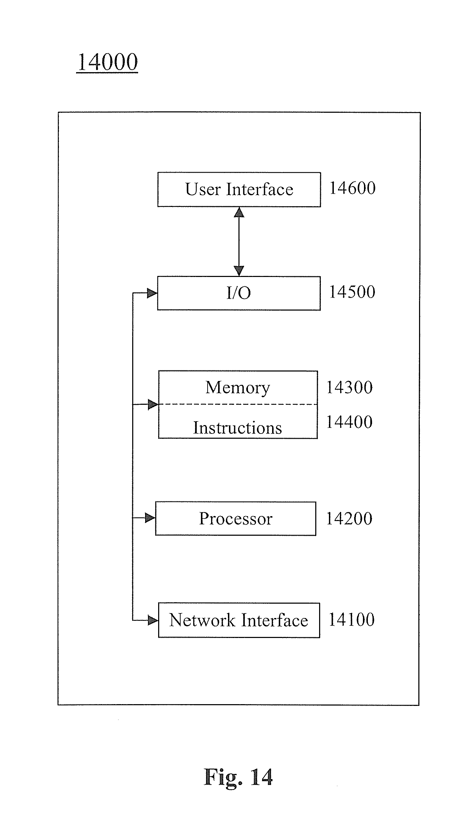

**FIG. 14** is a block diagram of an exemplary embodiment of an information device 14000.

### Detailed Description

The routers in an Autonomous System (AS) typically must distribute the information they learn about how to reach external destinations. Unfortunately, today's internal Border Gateway Protocol (iBGP) architectures have potentially serious problems: a "full mesh" iBGP configuration does not necessarily scale to large networks and "route reflection" can introduce problems such as protocol oscillations and persistent loops. Instead, we argue that a Routing Control Platform (RCP) can collect information about external destinations and/or internal topology and/or select the BGP routes for each router in an AS. RCP can be a logically centralized platform, separate from the IP forwarding plane, that can perform route selection on behalf of routers and/or can communicate selected routes to the routers using the unmodified iBGP protocol. RCP can provide scalability without sacrificing correctness. Herein, we present the design and implementation of an RCP prototype on commodity hardware. Using traces of BGP and internal routing data from a Tier-1 backbone, we demonstrate that RCP can be fast and reliable enough to drive the BGP routing decisions for a large network. We show that RCP can assign routes correctly, even when the functionality is replicated and distributed, and that networks using RCP can expect comparable convergence delays to those using today's iBGP architectures.

### 1 Introduction

The Border Gateway Protocol (BGP), the Internet's interdomain routing protocol, can be prone to protocol oscillation and forwarding loops, highly sensitive to topology changes inside an Autonomous System (AS), and/or difficult for operators to understand and/or manage. We address these potential problems by introducing a Routing Control Platform (RCP) that can compute the BGP routes for each router in an AS based on complete routing information and/or higher-level network engineering goals (see reference 1, 2). Herein we describe the design and implementation of an RCP prototype that can be fast and reliable enough to coordinate routing for a large backbone network.

### 1.1 Route Distribution Inside an AS

The routers in a single AS can exchange routes to external destinations using a protocol called internal BGP (iBGP). Small networks are typically configured as a "full mesh" iBGP topology, with an iBGP session between each pair of routers. However, a full-mesh configuration does not necessarily scale because each router typically must: (i) have an iBGP session with every other router, (ii) send BGP update messages to every other router, (iii) store a local copy of the advertisements sent by each neighbor for each destination prefix, and (iv) have a new iBGP session configured whenever a new router is added to the network. Although having a faster processor and more memory on every router would support larger full-mesh configurations, the installed base of routers tends to lag behind the technology curve, and upgrading routers can be quite costly. In addition, BGP-speaking routers do not always degrade gracefully when their resource limitations are reached; for example, routers crashing or experiencing persistent routing instability under such conditions have been reported (see reference 3). Herein we present the design, implementation, and evaluation of a solution that can behave like a full-mesh iBGP configuration with much less overhead and/or no changes to the installed base of routers.

To avoid the scaling problems of a full mesh, today's large networks typically configure iBGP as a hierarchy of *route reflectors* (see reference 4). A route reflector can select a single BGP route for each destination prefix and/or advertise the route to its clients. Adding a new router to the system often simply requires configuring iBGP sessions to the router's route reflector(s). Using route reflectors can reduce the memory and/o connection overhead on the routers, at the expense of compromising the behavior of the underlying network. In particular, a route reflector does not necessarily select the same BGP route that its clients would have chosen in a full-mesh configuration. Unfortunately, the routers along a path through the AS can be assigned different BGP routes from different route reflectors, leading to inconsistencies (see reference 5). These inconsistencies can cause protocol oscillation (see reference 6, 7, 8) and/or persistent forwarding loops (see reference 6). To prevent these problems, operators typically must ensure that route reflectors and their clients have a consistent view of the internal topology, which typically requires configuring a large number of routers as route reflectors. This can force large backbone networks to have dozens of route reflectors to reduce the likelihood of inconsistencies.

### 1.2 Routing Control Platform (RCP)

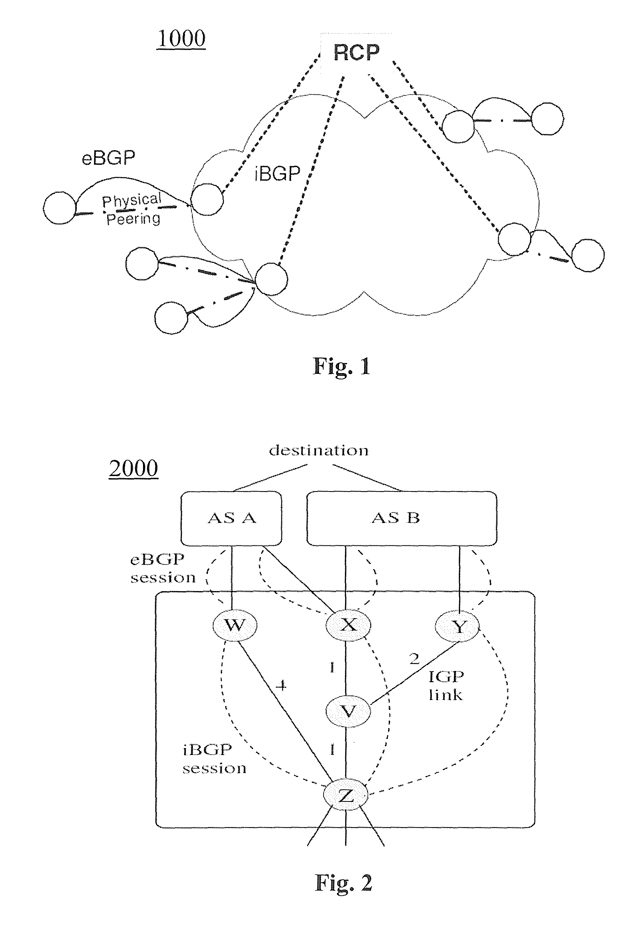

RCP can provide the intrinsic correctness of a full mesh iBGP configuration and/or the scalability benefits of route reflectors. RCP can select BGP routes on behalf of the routers in an AS using a complete view of the available routes and/or IGP topology. As shown in Figure 1, RCP can have iBGP sessions with each of the routers; these sessions can allow RCP to learn BGP routes and/or to send each router a routing decision for each destination prefix. Unlike a route reflector, RCP can send a different BGP route to each router. This flexibility can allow RCP to assign each router the route that it would have selected in a full-mesh configuration, while making the number of iBGP sessions at each router independent of the size of the network. We envision that RCP might ultimately exchange inter-domain routing information with neighboring domains, while still using iBGP to communicate with its own routers. Using the RCP to exchange reachability information across domains would enable the Internet's routing architecture to evolve (see reference 1).

To be a viable alternative to today's iBGP solutions, RCP can satisfy two main design goals: (i) consistent assignment of routes even when the functionality is replicated and distributed for reliability and (ii) fast response to network events, such as link failures and/or external BGP routing changes, even when computing routes for a large number of destination prefixes and routers. Herein we demonstrate that RCP can be made fast and reliable enough to supplant today's iBGP architectures, without requiring any changes to the implementation of the legacy routers. After a brief overview of BGP routing in Section 2, Section 3 presents the RCP architecture and describes how to compute consistent forwarding paths, without requiring any explicit coordination between the replicas. In Section 4, we describe a prototype implementation, built on commodity hardware, that can compute and disseminate routing decisions for a network with hundreds of routers. Section 5 demonstrates the effectiveness of our prototype by replaying BGP and OSPF messages from a large backbone network; we also discuss the challenges of handling OSPF-induced BGP routing changes and evaluate one potential solution. Section 6 summarizes this section of the description.

### 1.3 Related Work

Certain exemplary embodiments can *control* the BGP routing decisions for a network. In addition, RCP can make per-router routing decisions for an *entire network,* rather than a single router. RCP can improve the scalability and correctness of distributing and/or selecting BGP routes within a single AS.

### 2 Interoperating With Existing Routers

This section presents an overview of BGP routing inside an AS and highlights the implications on how RCP can work to avoid requiring changes to the installed base of IP routers.

**Partitioning of functionality across routing protocols**: In most backbone networks, the routers participate in three different routing protocols: external Border Gateway Protocol (eBGP) to exchange reachability information with neighboring domains, internal BGP (iBGP) to propagate the information inside the AS, and an Interior Gateway Protocol (IGP) to learn how to reach other routers in the same AS, as shown in Figure 2, which illustrates a network with three egress routers connecting to two neighboring AS's. The solid lines correspond to physical links (annotated with IGP link weights) and the dashed lines correspond to BGP sessions.

BGP is a path-vector protocol where each network can add its own AS number to the path before propagating the announcement to the next domain; in contrast, IGPs such as OSPF and IS-IS are typically link-state protocols with a tunable weight on each link. Each router can combine the information from the routing protocols to construct a local forwarding table that maps each destination prefix to the next link in the path. *In our design, RCP can assume responsibility for assigning a single best BGP route for each prefix to each router and distributing the routes using iBGP, while relying on the routers to "merge" the BGP and IGP data to construct their forwarding tables.*

**Table 1**

| | |
|---|---|
| 0. | Ignore if egress router unreachable |
| 1. | Highest local preference |
| 2. | Lowest AS path length |
| 3. | Lowest origin type |
| 4. | Lowest MED (with *same* next-hop AS) |
| 5. | eBGP-learned over iBGP-learned |
| 6. | Lowest IGP path cost to egress router |
| 7. | Lowest router ID of BGP speaker |

**BGP route-selection process:** To select a route for each prefix, each router can apply the decision process in Table 1 to the set of routes learned from its eBGP and iBGP neighbors (see reference 19). The decision process essentially can compare the routes based on their many attributes. In the simplest case, a router can select the route with the shortest AS path (step 2), breaking a tie based on the ID of the router who advertised the route (step 7). However, other steps can depend on route attributes, such as local preference, that are assigned by the routing policies configured on the border routers. *RCP can deal with the fact that the border routers apply policies to the routes learned from their eBGP neighbors and*/*or that all routers apply the route selection process to the BGP routes they learn.*

**Selecting the closest egress router:** In backbone networks, a router often has multiple BGP routes that are "equally good" through step 5 of the decision process. For example, router Z in Figure 2 can learn routes to the destination with the same AS path length from three border routers *W, X,* and *Y.* To reduce network resource consumption, the BGP decision process at each router can select the route with the *closest* egress router, in terms of the IGP path costs. Router *Z* can select the BGP route learned from router *X* with an IGP path cost of2. This practice is known as "early-exit" or "hot-potato" routing. *RCP can have a real-time view of the IGP topology to select the closest egress router for each destination prefix on behalf of each router. When the IGP topology changes, RCP can identify which routers should change the egress router they are using.*

**Challenges introduced by hot-potato routing**: A single IGP topology change can cause multiple routers to change their BGP routing decisions for multiple prefixes. If the IGP weight of link *V-X* in Figure 2 increased from 1 to 3, then router Z can start directing traffic through egress Y instead of *X.* When multiple destination prefixes are affected, these hot-potato routing changes can lead to large, unpredictable shifts in traffic (see reference 20). In addition, the network might experience long convergence delays because of the overhead on the routers to revisit the BGP routing decisions across many prefixes. Delays of one to two minutes are not uncommon (see reference 20). *To implement hot-potato routing, RCP can determine the influence of an IGP change on every router for every prefix. Ultimately, we view RCP as a way to move beyond hot-potato routing toward more flexible ways to select egress routers, as discussed in Section 5.4.*

### 3 RCP Architecture

In this section, we describe the RCP architecture. We first present the three potential building blocks ofthe RCP: the IGP Viewer, the BGP Engine, and the Route Control Server (RCS). We describe the information that can be available to each module, as well as the constraints that the RCS can satisfy when assigning routes. We then discuss how RCP's functionality can be replicated and/or distributed across many physical nodes in an AS while maintaining consistency and correctness. Our analysis shows that there is no need for the replicas to run a separate consistency protocol: since the RCP can be designed such that each RCS replica makes routing decisions only for the partitions for which it has complete IGP topology and BGP routes, every replica can make the same routing assignments, even without a consistency protocol.

### 3.1 RCP Modules

To compute the routes that each router would have selected in a "full mesh" iBGP configuration, RCP can obtain both the IGP topology information and the best route to the destination from every router that leams a route from neighboring AS's. As such, RCP can utilize the IGP Viewer, the BGP Engine, and/or the Route Control Server. The *IGP Viewer* can establish IGP adjacencies to one or more routers, which can allow the RCP to receive IGP topology information. The *BGP Engine* can learn BGP routes from the routers and/or can send the RCS's route assignments to each router. The *Route Control Server (RCS)* then can use the IGP topology from the IGP Viewer information and/or the BGP routes from the BGP engine to compute the best BGP route for each router.

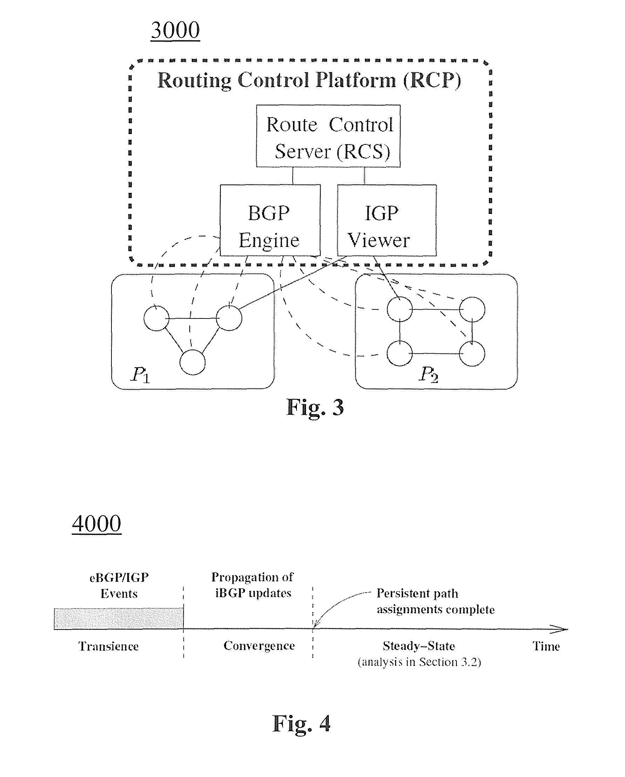

RCP can communicates with the routers in an AS using standard routing protocols, as summarized in Figure 3. As shown, RCP can interact with the routers using standard routing protocols. RCP can obtain IGP topology information by establishing IGP adjacencies (shown with solid lines) with one or more routers in the AS and BGP routes via iBGP sessions with each router (shown with dashed lines). RCP can control and/or obtain routing information from routers in separate network partitions (*P₁* and *P₂*). Although Figure 3 shows RCP as a single box, the functionality can be replicated and distributed, as we describe in Section 3.2.

Suppose the routers *R* in a single AS form an IGP connectivity graph *G* = *(R, E),* where *E* are the edges in the IGP topology. Although the IGP topology within an AS is typically a single connected component, failures of links, routers, and/or interfaces might occasionally create partitions. Thus, G can contain one or more connected components; i.e., *G* = *{P₁, P₂, ...,Pₙ}.* The RCS typically only computes routes for partitions Pᵢ for which it has complete IGP and BGP information, and it can compute routes for each partition independently.

### 3.1.1 IGP Viewer

The RCP's *IGP Viewer* can monitor the IGP topology and/or can provide this information to the RCS. The IGP Viewer can establish IGP adjacencies to receive the IGP's link state advertisements (LSAs). To ensure that the IGP Viewer never routes data packets, the links between the IGP Viewer and the routers can be configured with large IGP weights to ensure that the IGP Viewer is not an intermediate hop on any shortest path. Since IGPs such as OSPF and IS-IS can perform *reliable flooding* of LSAs, the IGP Viewer can maintain an up-to-date view of the IGP topology as the link weights change or equipment goes up and down. Use of flooding to disseminate LSAs can imply that the IGP Viewer can receive LSAs from all routers in a partition by simply having an adjacency to a single router in that partition. This property can have a potentially important implication:

**Observation 1** *The IGP Viewer can have the complete IGP topology for all partitions that it connects to.*

The IGP Viewer can compute pairwise shortest paths for all routers in the AS and/or can provide this information to the RCS. The IGP Viewer can discover the path costs between any two routers in the AS, but it need not discover the weights of each IGP edge. The RCS then can use these path costs to determine, from any router in the AS, what the closest egress router should be for that router.

In some cases, a group of routers in the IGP graph can all select the same router en route to one or more destinations. For example, a network might have a group of access routers in a city, all of which send packets out of that city towards one or more destinations via a single gateway router. These routers can always use the same BGP router as the gateway. These groups can be formed according to the IGP topology: for example, routers can be grouped according to OSPF "areas", since all routers in the same area typically make the same BGP routing decision. Because the IGP Viewer can know the IGP topology, it can determine which groups of routers should be assigned the same BGP route. By clustering routers in this fashion, the IGP Viewer can reduce the number of independent route computations that the RCS performs. While IGP topology is a convenient way for the IGP Viewer to determine these groups of routers, the groups need not correspond to the IGP topology; for example, an operator could dictate the grouping.

### 3.1.2 BGP Engine

The *BGP Engine* can maintain an iBGP session with each router in the AS. These iBGP sessions can allow the RCP to (1) learn about candidate routes and/or (2) communicate its routing decisions to the routers. Since iBGP can run over TCP, a BGP Engine need not be physically adjacent to every router. In fact, a BGP Engine can establish and maintain iBGP sessions with any router that is reachable via the IGP topology, which allows us to make the following observation:

**Observation 2** *A BGP Engine can establish iBGP sessions to all routers in the IGP partitions that it connects to.*

Here, we make a reasonable assumption that IGP connectivity between two endpoints is sufficient to establish a BGP session between them; in reality, persistent congestion or misconfiguration could cause this assumption to be violated, but these two cases are anomalous. In practice, routers are often configured to place BGP packets in a high-priority queue in the forwarding path to ensure the delivery of these packets even during times of congestion.

In addition to receiving BGP updates, the RCP can use the iBGP sessions to send the chosen BGP routes to the routers. Because BGP updates can have a "next hop" attribute, the BGP Engine can advertise BGP routes with "next hop" addresses of other routers in the network. This characteristic means that *the BGP Engine does not need to forward data packets.* The BGP routes typically carry "next hop" attributes according to the egress router at which they were learned. Thus, the RCS can send a route to a router with the next hop attribute unchanged, and routers will forward packets towards the egress router.

A router can interact with the BGP Engine in the same way as it would with a normal BGP-speaking router, but the BGP Engine can send a different route to each router. (In contrast, a traditional route reflector would send the same route to each of its neighboring routers.) A router typically only sends BGP update messages to the BGP Engine when selecting a new best route learned from a neighboring AS. Similarly, the BGP Engine typically only sends an update when a router's decision should change.

### 3.1.3 Route Control Server (RCS)

The RCS can receive IGP topology information from the IGP Viewer and BGP can route from the BGP Engine, compute the routes for a group of routers, and/or return the resulting route assignments to the routers using the BGP Engine. The RCS typically does not return a route assignment to any router that has already selected a route that is "better" than any of the other candidate routes, according to the decision process in Table 1. To make routing decisions for a group of routers in some partition, the following can and/or must be true:

**Observation 3** *An RCS can only make routing decisions for routers in a partition for which it has* both *IGP and BGP routing information.*

Note that the previous observations can guarantee that the RCS can (and will) make path assignments for all routers in that partition. Although the RCS has considerable flexibility in assigning routes to routers, one reasonable approach would be to have the RCS send to each router the route that it would have selected in a "full mesh" iBGP configuration. To emulate a full-mesh iBGP configuration, the RCS can execute the BGP decision process in Table 1 on behalf of each router. The RCS can perform this computation because: (1) knowing the IGP topology, the RCS can determine the set of egress routers that are reachable from any router in the partitions that it sees; (2) the next four steps in the decision process can compare attributes that appear in the BGP messages themselves; (3) for step 5, the RCS can consider a route as eBGP learned for the router that sent the route to the RCP, and as an iBGP-learned route for other routers; (4) for step 6, the RCS can compare the IGP path costs sent by the IGP Viewer; and (5) for step 7, the RCS can know the router ID of each router because the BGP Engine can have an iBGP session with each of them. After computing the routes, the RCS can send each router the appropriate route.

Using the high-level correctness properties from previous work as a guide (see reference 21), we recognize that routing within the network can and/or must satisfy the following properties (note that iBGP does *not* intrinsically satisfy them (see reference 6, 21)):

**Route validity: The RCS should not assign routes that create forwarding loops, blackholes, or other anomalies that prevent packets from reaching their intended destinations.** To satisfy this property, two invariants can and/or must hold. First, the RCS can and/or must assign routes such that the routers along the shortest IGP path from any router to its assigned egress router must be assigned a route with the same egress router. Second, the RCS can and/or must assign a BGP route such that the IGP path to the next-hop of the route only traverses routers in the same partition as the next-hop.

When the RCS computes the same route assignments as those the routers would select in a full mesh iBGP configuration, the first invariant can and/or will always hold, for the same reason that it can hold in the case of full mesh iBGP configuration. In a full mesh, each router can simply select the egress router with the shortest IGP path. All routers along the shortest path to that egress also can select the same closest egress router. The second invariant can be satisfied because the RCS need never assign an egress router to a router in some other partition. Generally, the RCS has considerable flexibility in assigning paths; the RCS can and/or must guarantee that these properties hold even when it is not emulating a full mesh configuration.

**Path visibility: Every router can and/or should be able to exchange routes with at least one RCS**. Each router in the AS can and/or should receive some route to an external destination, assuming one exists. To ensure that this property is satisfied, each partition can and/or must have at least one IGP Viewer, one BGP Engine, and one RCS. Replicating these modules can reduce the likelihood that a group of routers is partitioned such that it cannot reach at least one instance of these three components. If the RCS is replicated, then two replicas might assign BGP routes to groups of routers along the same IGP path between a router and an egress. To guarantee that two replicas do not create forwarding loops when they assign routes to routers in the same partition, they can and/or must make consistent routing decisions. If a network has multiple RCS's, the route computation performed by the RCS can and/or must be deterministic: the same IGP topology and BGP route inputs can and/or must always produce the same outcome for the routers.

If a partition forms such that a router is partitioned from RCP, then we note that (1) the situation need be no worse than today's scenario, when a router cannot receive BGP routes from its route reflector and (2) in many cases, the router can still route packets using the routes it leams via eBGP, which will likely be its best routes since it is partitioned from most of the remaining network anyway.

### 3.2 Consistency with Distributed RCP

In this section, we discuss the potential consistency problems introduced by replicating and distributing the RCP modules. To be robust to network partitions and avoid creating a single point of failure, the RCP modules can and/or should be replicated. (We expect that many possible design strategies will emerge for assigning routers to replicas. Possible schemes include using the closest replica, having primary and backup replicas, etc.) Replication can introduce the possibility that each RCS replica might have different views of the network state (i.e., the IGP topology and BGP routes). These inconsistencies might be either transient or persistent and could create problems such as routing loops if routers were learning routes from different replicas. Note that the seriousness of these inconsistencies can depend on the mechanism that routers use to forward packets to a chosen egress router. If the AS uses an IGP to forward packets between ingress and egress routers, then inconsistent egress assignments along a single IGP path could result in persistent forwarding loops. On the other hand, if the AS runs a tunneling protocol (e.g., MPLS) to establish paths between ingress and egress routers, inconsistent route assignments are not likely to cause loops, assuming that the tunnels themselves are loop-free. The potential for these inconsistencies would seem to create the need for a consistency protocol to ensure that each RCS replica has the same view of the network state (and, thus, make consistent routing decisions). In this section, we discuss the nature and consequences of these inconsistencies and present the surprising result that no consistency protocol is necessarily required to prevent persistent inconsistencies.

After discussing why we are primarily concerned with consistency of the RCS replicas in steady state, we explain how our replication strategy can guarantee that the RCS replicas make the same routing decisions for each router in the steady state. Specifically, we show that, if multiple RCS replicas have IGP connectivity to some router in the AS, then those replicas can and/or will all make the same path assignment for that router. We focus our analysis on the consistency of RCS path assignments in steady state, which is shown in Figure 4, and which also shows the periods during convergence to steady state for a single destination. Routes to a destination within an AS are stable most of the time, with periods of transience (caused by IGP or eBGP updates). Rather than addressing the behavior during the transient period, we analyze the consistency of paths assigned during steady state.

### 3.2.1 Transient vs. Persistent Inconsistencies

Since each replica might receive BGP and IGP updates at different times, the replicas might not have the same view of the routes to every destination at any given time; as a result, each replica might make different routing decisions for the same set of routers. Figure 4 illustrates a timeline that shows this transient period. During transient periods, routes might be inconsistent. On a per-prefix basis, long transient periods are *not the common case:* although BGP update traffic can be fairly continuous, the update traffic *for a single destination* as seen by a single AS can be relatively bursty, with prolonged periods of silence. That is, a group of updates might arrive at several routers in an AS during a relatively short time interval (i.e., seconds to minutes), but, on longer timescales (i.e., hours), the BGP routes for external destinations can be relatively stable (see reference 22).

We are concerned with the consistency of routes for each destination *after* the transient period has ended. Because the network might actually be partitioned in "steady state", the RCP can and/or must still consider network partitions that might exist during these periods. Note that *any intra-AS routing protocol, including any iBGP configuration, can and*/*or will temporarily have inconsistent path assignments when BGP and IGP routes are changing continually.* Comparing the nature and extent of these transient inconsistencies in RCP to those that occur under a typical iBGP configuration is an area for future work.

### 3.2.2 RCP Replicas are Consistent in Steady State

The RCS replicas can and/or should make consistent routing decisions in steady state. Although it might seem that such a consistency requirement mandates a separate consistency protocol, we show in this section that such a protocol is not necessary.

**Proposition 1** *If multiple RCS's assign paths to routers in Pᵢ , then each router in Pᵢ would receive the same route assignment from each RCS.*

*Proof.* Recall that two RCS's will only make different assignments to a router in some partition *Pᵢ* if the replicas receive different inputs (i.e., as a result of having BGP routes from different groups of routers or different views of IGP topology). Suppose that RCS's 2 and 3 both assign routes to some router in *Pᵢ.* By Observation 1, both RCS's 2 and 3 must have IGP topology information for *all* routers in *Pᵢ,* and from Observation 2, they also have complete BGP routing information. It follows from Observation 3 that both RCS's 2 and 3 can make route assignments for all routers in *Pᵢ.* Furthermore, since both RCS's have complete IGP and BGP information for the routers in *Pᵢ* (i.e., the replicas receive the same inputs), then RCS's 2 and 3 will make the same route assignment to each router in *Pᵢ.*

We note that certain failure scenarios might violate Observation 2; there may be circumstances under which IGP-level connectivity exists between the BGP engine and some router but, for some reason, the iBGP session fails (e.g., due to congestion, misconfiguration, software failure, etc.). As a result, Observation 3 might be overly conservative, because there might exist routers in some partition for which two RCS's might have BGP routing information from different subsets of routers in that partition. If this is the case, then, by design, neither RCS will assign routes to *any* routers in this partition, even though, collectively, both RCS's have complete BGP routing information. In this case, not having a consistency protocol affects liveness, but not correctness; in other words, two or more RCS's might fail to assign routes to routers in some partition even when they collectively have complete routing information, but in no case will two or more RCS's assign different routes to the same router.

### 4 RCP Architecture and Exemplary Implementation

To demonstrate the feasibility of the RCP architecture, this section presents the design and implementation of an exemplary RCP prototype. Scalability and efficiency pose the main challenges, because backbone AS's typically have many routers (e.g., 500-1000) and destination prefixes (e.g., 150,000-200,000), and the routing protocols typically must converge quickly. First, we describe how the prototype RCS computes the BGP routes for each group of routers in response to BGP and IGP routing changes. We then explain how the prototype IGP Viewer obtains a view of the IGP topology and provides the RCS with only the necessary information for computing BGP routes. Our prototype of the IGP Viewer is implemented for OSPF; when describing our prototype, we will describe the IGP Viewer as the "OSPF Viewer". Finally, we describe how the prototype BGP Engine exchanges BGP routing information with the routers in the AS and the RCS.

### 4.1 Prototype Route Control Server (RCS)

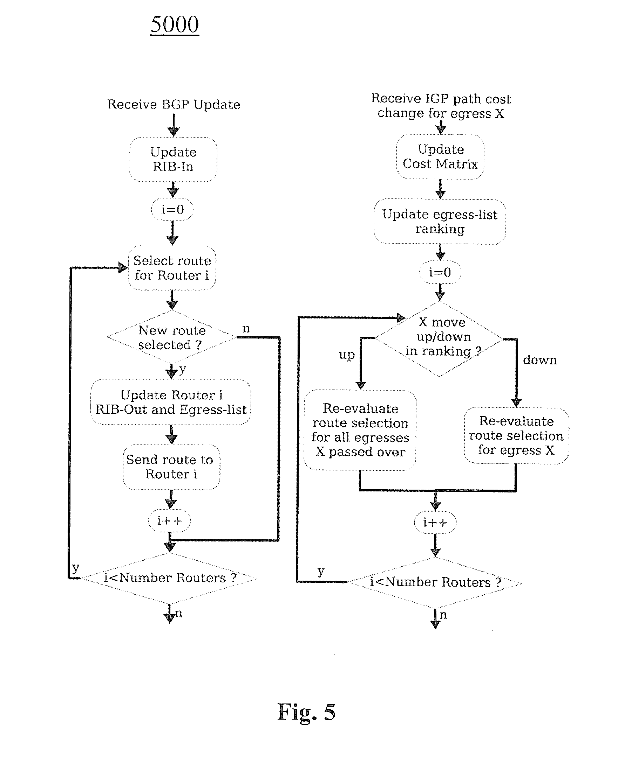

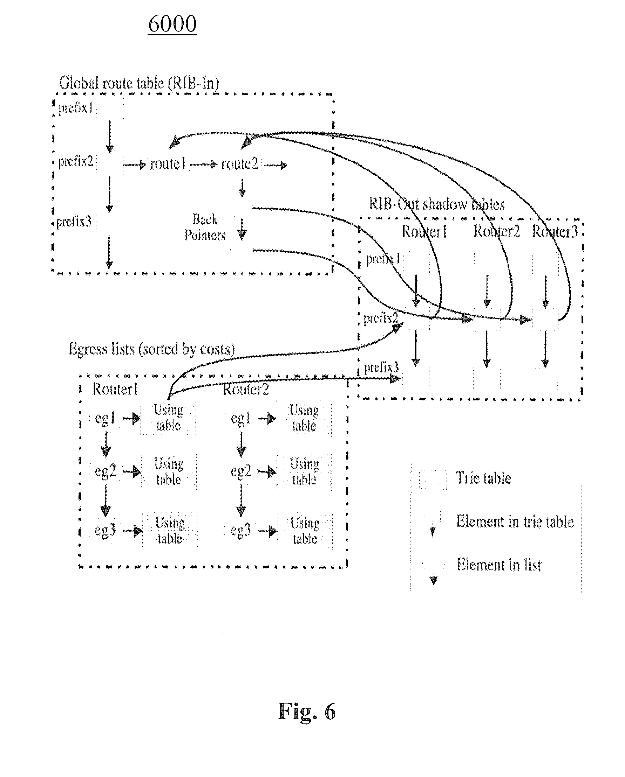

The RCS processes messages received from both the BGP Engine(s) and the OSPF Viewer(s). Figure 5 shows the high level processing performed, and/or the and/or functionality provided, by the RCS. The RCS receives update messages from the BGP Engine(s) and stores the incoming routes in a Routing Information Base (RIB). The RCS performs per-router route selection and stores the selected routes in a per-router RIB-Out. The RIB-In and RIB-Out tables are implemented as a trie indexed on prefix. The RIB-In maintains a list of routes learned for each prefix; each BGP route has a "next hop" attribute that uniquely identifies the egress router where the route was learned. As shown in Figure 5, the RCS also receives the IGP path cost for each pair of routers from the IGP Viewer. The RCS uses the RIB-In to compute the best BGP routes for each router, using the IGP path costs in steps 5 and 6 of Table 1. After computing a route assignment for a router, the RCS sends that route assignment to the BGP Engine, which sends the update message to the router. The path cost changes received from the OSPF Viewer might require the RCS to re-compute selected routes when step 6 in the BGP decision process was used to select a route and the path cost to the selected egress router changes. Finding the routes that are affected can be an expensive process and as shown in Figure 5, our design uses a path-cost based ranking of egress routers to perform this efficiently. We now describe this approach and other design insights in more detail with the aid of Figure 6, which shows the main RCS data structures, including the RCS RIB-In and RIB-Out data structures and egress lists.

**Store only a single copy of each BGP route.** Storing a separate copy of each router's BGP routes for every destination prefix would require an extraordinary amount of memory. To reduce storage requirements, the RCS only stores routes in the RIB-In table. The next hop attribute of the BGP route uniquely identifies the egress router where the BGP route was learned. Upon receiving an update message, the RCS can index the RIB-In by prefix and can add, update, or remove the appropriate route based on the next-hop attribute. To implement the RIB-Out, the RCS employs per-router *shadow tables* as a prefix-indexed trie containing pointers to the RIB-In table. Figure 6 shows two examples of these pointers from the RIB-Out to the RIB-In: router1 has been assigned the route1 for prefix2, whereas router2 and router3 have both been assigned route2 for prefix2.

**Keep track of the routers that have been assigned each route.** When a route is withdrawn, the RCS must recompute the route assignment for any router that was using the withdrawn route. To quickly identify the affected routers, each route stored in the RIB-In table includes a list of back pointers to the routers assigned this route. For example, Figure 6 shows two pointers from route2 in the RIB-In for prefix2 to indicate that router2 and router3 have been assigned this route. Upon receiving a withdrawal of the prefix from this next-hop attribute, the RCS reruns the decision process for each router in this list, with the remaining routes in the RIB-In, for those routers and prefix. Unfortunately, this optimization cannot be used for BGP *announcements,* because when a new route arrives, the RCS must recompute the route assignment for each router. Note that this optimization requires MED attributes to be compared across all routes in step 4 in Table 1. If MED attributes are only compared between routes with the same next-hop AS, the BGP decision process does not necessarily form a total ordering on a set of routes; consequently, the presence or absence of a non-preferred route may influence the BGP decision (see reference 17). In this case, our optimization could cause the RCS to select a different best route than the router would in a regular BGP configuration.

**Maintain a ranking of egress routers for each router based on IGP path cost.** A single IGP pathcost change may affect the BGP decisions for many destination prefixes at the ingress router. To avoid revisiting the routing decision for every prefix and router, the RCS maintains a ranking of egress points for each router sorted by the IGP path cost to the egress point (the "Egress lists" table in Figure 6). For each egress, the RCS stores pointers to the prefixes and routes in the RIB-Out that use the egress point (the "using table"). For example, router1 uses eg1 to reach both prefix2 and prefix3, and its using table contains pointers to those entries in the RIB-Out for router1 (which in turn point to the routes stored in the RIB-In). If the IGP path cost from router1 to eg1 increases, the RCS moves eg1 down the egress list until it encounters an egress router with a higher IGP path cost. The RCS then only recomputes BGP decisions for the prefixes that previously had been assigned the BGP route from eg1 (i.e., the prefixes contained in the using table). Similarly, if a path-cost change causes eg3 to become routerl's closest egress point, the RCS resorts the egress list (moving eg3 to the top of the list) and only recomputes the routes for prefixes associated with the egresses routers "passed over" in the sorting process, i.e., eg1 and eg2, since they may now need to be assigned to eg3.

**Assign routes to groups of related routers.** Rather than computing BGP routes for each router, the RCS can assign the same BGP route for a destination prefix to a *group* of routers. These groups can be identified by the IGP Viewer or explicitly configured by the network operator. When the RCS uses groups, the RIB-Out and Egress-lists tables have entries for each *group* rather than each router, leading to a substantial reduction in storage and CPU overhead. The RCS also maintains a list of the routers in each group to instruct the BGP Engine to send the BGP routes to each member of the group. Groups introduce a trade-off between the desire to reduce overhead and the flexibility to assign different routes to routers in the same group. In our prototype implementation, we use the Points-of-Presence (which correspond to OSPF areas) to form the groups, essentially treating each POP as a single "node" in the graph when making BGP routing decisions.

### 4.2 Prototype IGP Viewer Instance: OSPF Viewer

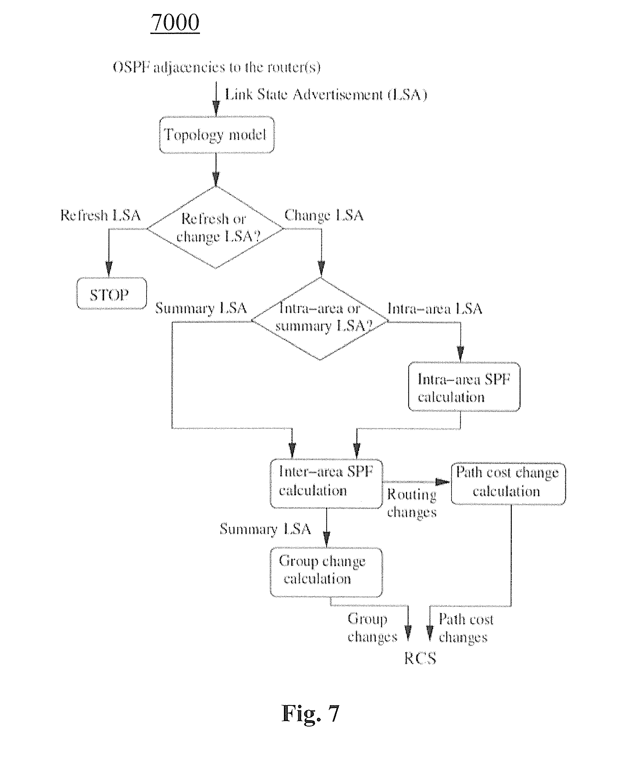

The OSPF Viewer connects to one or more routers in the network to receive link-state advertisements (LSAs), as shown in Figure 3. The OSPF Viewer maintains an up-to-date view of the network topology and computes the path cost for each pair of routers. Figure 7 shows an overview of the processing performed by the OSPF Viewer. By providing path-cost changes and group membership information, the OSPF Viewer offloads work from the RCS in two main ways.

**Send only path-cost changes to the RCS.** In addition to originating an LSA upon a network change, OSPF periodically refreshes LSAs even if the network is stable. The OSPF Viewer filters the refresh LSAs since they do not require any action from the RCS. The OSPF Viewer does so by maintaining the network state as a topology model (see reference 9), and uses the model to determine whether a newly received LSA indicates a change in the network topology, or is merely a refresh as shown in Figure 7. For a change LSA, the OSPF Viewer runs shortest-path first (SPF) calculations from each router's viewpoint to determine the new path costs. Rather than sending all path costs to the RCS, the OSPF Viewer only passes the path costs that changed as determined by the "path cost change calculation" stage.

The OSPF Viewer must capture the influence of OSPF areas on the path costs. For scalability purposes, an OSPF domain may be divided into areas to form a hub-and-spoke topology. Area 0, known as the *backbone area,* forms the hub and provides connectivity to the non-backbone areas that form the spokes. Each link belongs to exactly one area. The routers that have links to multiple areas are called *border routers.* A router learns the entire topology of the area it has links into through "intra-area" LSAs. However, it does not learn the entire topology of remote areas (i.e., the areas in which the router does not have links), but instead learns the total cost of the paths to every node in remote areas from each border router the area has through "summary" LSAs.

It may seem that the OSPF Viewer can perform the SPF calculation over the entire topology, ignoring area boundaries. However, OSPF mandates that if two routers belong to the same area, the path between them must stay within the area even if a shorter path exists that traverses multiple areas. As such, the OSPF Viewer cannot ignore area boundaries while performing the calculation, and instead has to perform the calculation in two stages. In the first stage, termed the *intra-area stage,* the viewer computes path costs for each area separately using the intra-area LSAs as shown in Figure 7. Subsequently, the OSPF Viewer computes path costs between routers in different areas by combining paths from individual areas. We will term this stage of the SPF calculation as the *inter-area stage.* In some circumstances, the OSPF Viewer knows the topology of only a subset of areas, and not all areas. In this case, the OSPF Viewer can perform intra-area stage calculations only for the visible areas. However, use of summary LSAs from the border routers allows the OSPF Viewer to determine path costs to routers in non-visible areas from routers in visible areas during inter-area stage.

**Reduce overhead at the RCS by combining routers into groups**. The OSPF Viewer can capitalize on the area structure to reduce the number of routers the RCS must consider. To achieve this, the OSPF Viewer: (i) provides path cost information for all area 0 routers (which also includes border routers in non-zero areas), and (ii) forms a group of routers for each non-zero area and provides this group information. As an added benefit, the OSPF Viewer does not need physical connections to non-zero areas, since the summary LSAs from area 0 allows it to compute path costs from every area 0 router to every other router. The OSPF Viewer also uses the summary LSAs to determine the groups of routers. It is potentially important to note that combining routers into groups is a construct internal to the RCP to improve efficiency, and it does not require any protocol or configuration changes in the routers.

### 4.3 Prototype BGP Engine

The BGP Engine receives BGP messages from the routers and sends them to the RCS. The BGP Engine also receives instructions from the RCS to send BGP routes to individual routers. We have implemented the BGP Engine by modifying the Quagga (see reference 11) software router to store the outbound routes on a *per-router* basis and accept route assignments from the RCS rather than computing the route assignments itself The BGP Engine off-loads work from the RCS by applying the following two design insights:

**Cache BGP routes for efficient refreshes.** The BGP Engine stores a local cache of the RIB-In and RIB-Out. The RIB-In cache allows the BGP Engine to provide the RCS with a fresh copy of the routes without affecting the routers, which makes it easy to introduce a new RCS replica or to recover from an RCS failure. Similarly, the RIB-Out cache allows the BGP Engine to re-send BGP route assignments to operational routers without affecting the RCS, which is useful for recovering from the temporary loss of iBGP connectivity to the router. Because routes are assigned on a per-router basis, the BGP Engine maintains a RIB-Out for each router, using the same kind of data structure as the RCS.

**Manage the low-level communication with the routers.** The BGP Engine provides a simple, stable layer that interacts with the routers and maintains BGP sessions with the routers and multiplexes the update messages into a single stream to and from the RCS. It manages a large number of TCP connections and supports the low-level details of establishing BGP sessions and exchanging updates with the routers.

### 5 Evaluation

In this section, we evaluate our prototype implementation, with an emphasis on the scalability and efficiency of the system. The purpose of the evaluation is twofold. First, to determine the feasible operating conditions for our prototype, i.e., its performance as a function of the number of prefixes and routes, and the number of routers or router groups. Second, we want to determine what the bottlenecks (if any), would require further enhancements. We present our methodology in Section 5.1 and the evaluation results in Sections 5.2 and 5.3. In Section 5.4 we present experimental results of an approach that weakens the current tight coupling between IGP path-cost changes and BGP decision making.

### 5.1 Methodology

For a realistic evaluation, we use BGP and OSPF data collected from a Tier-1 ISP backbone on August 1, 2004. The BGP data contains both time-stamped BGP updates as well as periodic table dumps from the network. Note that we filtered the BGP data so that only externally learned BGP updates were used. This represents the BGP traffic that an RCP would process when deployed. Similarly, the OSPF data contains time-stamped Link State Advertisements (LSAs). We developed a *router emulator* tool that reads the time-stamped BGP and OSPF data and then "plays back" these messages against instrumented implementations of the prototype RCP components. To initialize the prototype RCS to realistic conditions, the router emulator reads and replays the BGP table dumps before any experiments are conducted.

By selectively filtering the data, we use this single data set to consider the impact of network size (i.e., the number of routers or router groups in the network) and number of routes (i.e., the number of prefixes for which routes were received). We vary the network size by only calculating routes for a subset of the router groups in the network. Similarly, we only consider a subset of the prefixes to evaluate the impact of the number of routes on the prototype RCP. Considering a subset of routes is relevant for networks that do not have to use a full set of Internet routes but might still benefit from the RCP functionality, such as private or virtual private networks.

For the RCS evaluation, the metrics of potentially greatest interest are (i) the time taken to perform customized per-router route selection under different conditions and (ii) the memory required to maintain the various data structures. We measure these metrics in three ways:

*Whitebox:* First, we perform whitebox testing by instrumenting specific RCS functions and measuring on the RCS both the memory usage and the time required to perform route selection when BGP and OSPF related messages are being processed.

*Blackbox no queuing:* For blackbox no queuing, the router-emulator replays one message at a time and waits to see a response before sending the next message. This technique measures the additional overhead of the message passing protocol needed to communicate with the RCS.

*Blackbox real-time:* For blackbox real-time testing, the router-emulator replays messages based on the timestamps recorded in the data. In this case, ongoing processing on the RCS can cause messages to be queued, thus increasing the effective processing times as measured at the router-emulator.

For all blackbox tests, the RCS sends routes back to the router-emulator to allow measurements to be done.

In Section 5.2, we focus our evaluation on how the RCP processes BGP updates and performs customized route selection. Our BGP Engine implementation extends the Quagga BGP daemon process and as such inherits many of its qualities from Quagga. Since we made no enhancements to the BGP protocol part of the BGP Engine but rely on the Quagga implementation we do not present an evaluation of its scalability herein. Note that our modular architecture would allow other BGP Engine implementations to be utilized if needed. Indeed, if required for scalability reasons, multiple BGP Engines can be deployed to "cover" a network. Our main enhancement, the shadow tables maintained to realize per-router RIB-Outs, use the same data structures as the RCS, and hence, the evaluation of the RCS memory requirements is sufficient to show its feasibility.

In Section 5.3, we present an evaluation ofthe exemplary OSPF Viewer and the OSPF-related processing in the RCS. We evaluate the OSPF Viewer by having it read and process LSAs that were previously dumped to a file by a monitoring process. The whitebox performance ofthe OSPF Viewer is determined by measuring the time it takes to calculate the all pairs shortest paths and OSPF groups. The OSPF Viewer can also be executed in a test mode where it can log the path cost changes and group changes that would be passed to the RCS under normal operating conditions. The router-emulator reads and then plays back these logs against the RCS for blackbox evaluation ofthe RCS OSPF processing.

The evaluations were performed with the RCS and OSPF Viewer running on a dual 3.2 GHz Pentium-4 processor Intel system with 8 GB of memory and running a Linux 2.6.5 kernel. We ran the router-emulator on a 1 GHz Pentium-3 Intel system with 1 GB of memory and running a Linux 2.4.22 kernel.

### 5.2 BGP Processing

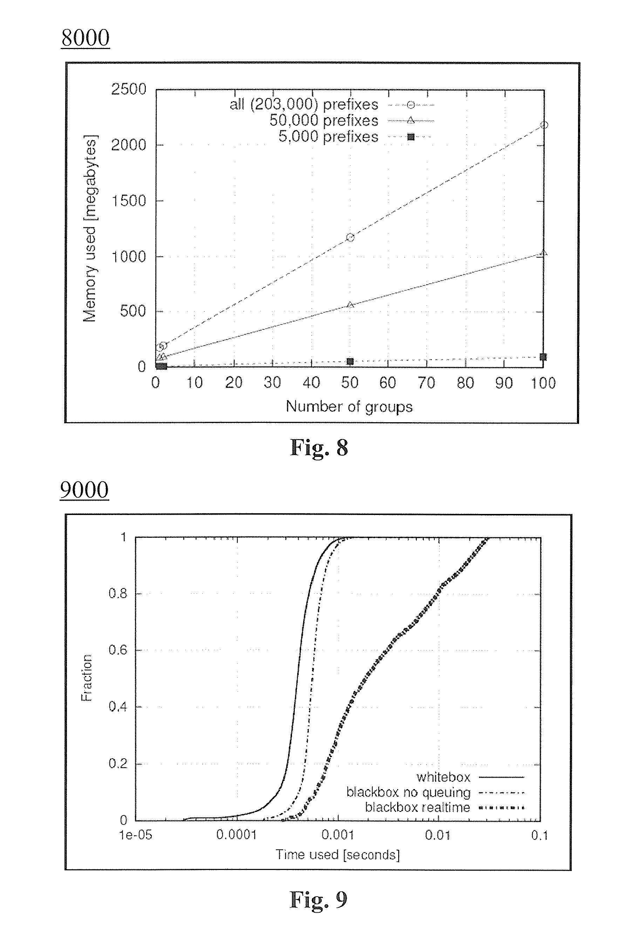

Figure 8 shows the amount of memory required by the exemplary RCS as a function of group size and for different numbers of prefixes. Recall that a group is a set of routers that would be receiving the same routes from the RCS. Backbone network topologies are typically built with a core set of backbone routers that interconnect points-of-presence (POP's), which in turn contain access routers (see reference 23). All access routers in a POP would typically be considered part of a single group. Thus the number of groups required in a particular network becomes a function of the number of POP's and the number of backbone routers, but is independent of the number of access routers. A 100-group network therefore translates to quite a large network. Note that the per-process memory restrictions on our 32-bit platform prevented us from evaluating more groups.

We saw more than 200,000 unique prefixes in our data. The effectiveness ofthe RCS shadow tables is evident by the modest rate of increase of the memory needs as the number of groups are increased. For example, storing all 203,000 prefixes for 1 group takes 175MB, while maintaining the table for 2 groups only requires an additional 21MB, because adding a group only increases the number of pointers into the global table, not the total number of unique routes maintained by the system. The total amount of memory needed for all prefixes and 100 groups is 2.2 GB, a fairly modest amount of memory by today's standards. We also show the memory requirements for networks requiring fewer prefixes.

For the BGP (only) processing considered in this subsection, we evaluate the RCS using 100 groups, all 203,000 prefixes and BGP updates only. Specifically, for these experiments the RCS used static IGP information and no OSPF related events were played back at the RCS.

Figure 9 shows BGP decision process times for 100 groups and all 203,000 prefixes for three different tests. Shown are the RCS route selection time for whitebox testing (instrumented RCS), blackbox testing no queuing (single BGP announcements sent to RCS at a time), blackbox testing real-time (BGP announcements sent to RCS in real-time). First, the whitebox processing times are shown. The 90th percentile of the processing times for whitebox evaluation is 726 microseconds. The graph also shows the two blackbox test results, namely blackbox no queuing and blackbox real-time. As expected, the message passing adds some overhead to the processing times. The difference between the two blackbox results are due to the bursty arrival nature ofthe BGP updates, which produces a queuing effect on the RCS. An analysis of the BGP data show that the average number of BGP updates over 24 hours is only 6 messages per second. However, averaged over 30 second intervals, the maximum rate is much higher, going well over 100 messages per second several times during the day.

### 5.3 OSPF and Overall Processing

In this section, we first evaluate only the OSPF processing ofRCP by considering both the performance of the exemplary OSPF Viewer and the performance of the RCS in processing OSPF-related messages. Then we evaluate the overall performance of RCP for combined BGP and OSPF related processing.

**Table 2**

| **LSA Type** | **Percentage** |
|---|---|
| Refresh | 99.9244 |
| Area 0 change | 0.0057 |
| Non-zero area change | 0.0699 |

**OSPF**: Recall that per LSA processing on the OSPF Viewer depends on the type of LSA. Table 2 shows the breakdown of LSA traffic into these types for August 1, 2004 data. Note that the refreshes account for 99.9% ofthe LSAs and require minimal processing in the OSPF Viewer; furthermore, the OSPF Viewer completely shields RCS from the refresh LSAs. For the remaining, i.e., change LSAs, Table 3 shows the whitebox, blackbox no queuing, and blackbox real-time measurements of the OSPF Viewer, as mean LSA processing time (in seconds). The table also shows the breakdown of white-box measurements into various calculation steps.

**Table 3**

| **Measurement type** | **Area 0 change LSA** | **Non-zero area change LSA** |
|---|---|---|
| Topology model | 0.0089 | 0.0029 |
| Intra-area SPF | 0.2106 | - |
| Inter-area SPF | 0.3528 | 0.0559 |
| Path cost change | 0.2009 | 0.0053 |
| Group change | - | 0.0000 |
| Miscellaneous | 0.0084 | 0.0010 |
| Total (whitebox) | 0.7817 | 0.0653 |
| Total (blackbox no queuing) | 0.7944 | 0.0732 |
| Total (blackbox real-time) | 0.7957 | 0.1096 |

The results in Table 3 allow us to make several potentially important conclusions. First, and potentially most importantly, the OSPF Viewer can process all change LSAs in a reasonable amount of time. Second, the SPF calculation and path cost change steps are the main contributors to the processing time. Third, the area 0 change LSAs take an order of magnitude more processing time than non-zero change LSAs, since area 0 changes require re-computing the path costs to every router; fortunately, the delay is still less than 0.8 seconds and, as shown in Table 2, area 0 changes are responsible for a very small portion of the change LSA traffic.

We now consider the impact of OSPF related events on the RCS processing times. Recall that OSPF events can cause the recalculation of routes by the RCS. We consider OSPF related events in isolation by playing back to the RCS only OSPF path cost changes; i.e., the RCS was pre-loaded with BGP table dumps into a realistic operational state, but no other BGP updates were played back.

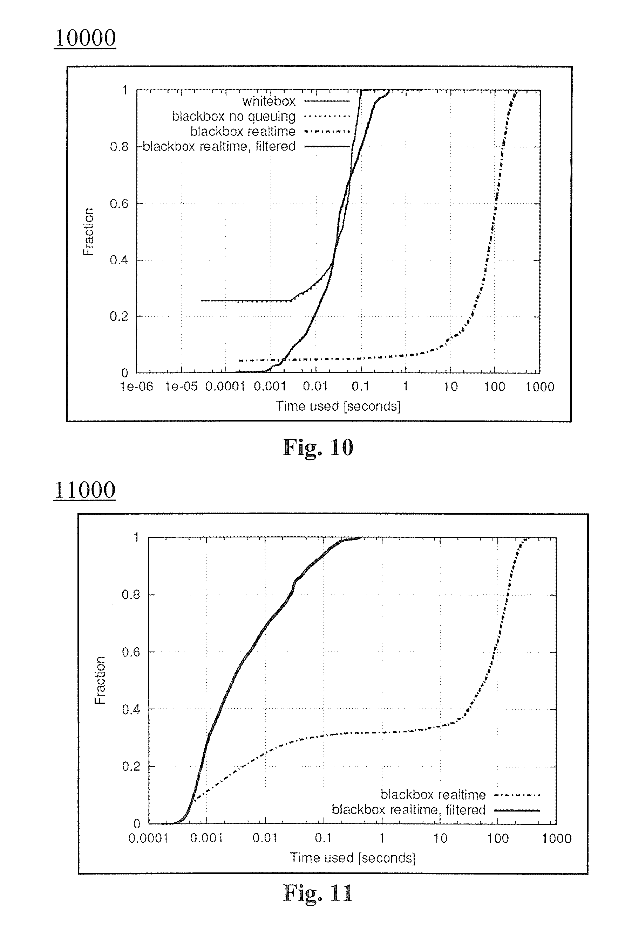

Figure 10 shows RCS processing times caused by path cost changes for three different experiments with 100 router groups. Shown are the RCS route selection time for whitebox testing (instrumented RCS), blackbox testing no queuing (single path cost change sent to RCS at a time), blackbox testing real-time (path cost changes sent to RCS in real-time), and blackbox testing real-time with filtered path cost changes. Recall from Section 4.1 and Figure 6 that the sorted egress lists are used to allow the RCS to quickly fmd routes that are affected by a particular path cost change. The effectiveness of this scheme can be seen from Figure 10 where the 90th percentile for the whitebox processing is approximately 82 milliseconds. Figure 10 also shows the blackbox results for no queuing and real-time evaluation. As before the difference between the whitebox and blackbox no queuing results are due to the message passing overhead between the route emulator (emulating the OSPF Viewer in this case) and the RCS. The processing times dominate relative to the message passing overhead, so these two curves are almost indistinguishable. The difference between the two blackbox evaluations suggests significant queuing effects in the RCS, where processing gets delayed because the RCS is processing earlier path cost changes, which is confirmed by an analysis of the characteristics of the path cost changes: while relatively few events occur during the day, some generate several hundred path cost changes per second. The 90th percentile of the blackbox real-time curve is 150 seconds. This result highlights the difficulty in processing internal topology changes. We discuss a more efficient way of dealing with this (the "filtered" curve in Figure 10) in Section 5.4.

**Overall:** The above evaluation suggests that processing OSPF path cost changes would dominate the overall processing time. This is indeed the case and Figure 11 shows the combined effect (all path cost changed (unfiltered) and filtered past cost changes) of playing back both BGP updates and OSPF path cost changes against the RCS. Clearly the OSPF path cost changes dominate the overall processing with the 90th percentile at 192 seconds. (The curve labeled "filtered" will be considered in the next section.)

### 5.4 Decoupling BGP from IGP

Although our RCP prototype handles BGP update messages very quickly, processing the internal topology changes introduces a significant challenge. The problem stems from the fact that a single event (such as a link failure) can change the IGP path costs for numerous pairs of routers, which can change the BGP route assignments for multiple routers and destination prefixes. This is fundamental to the way the BGP decision process uses the IGP path cost information to implement hot-potato routing.

The vendors of commercial routers also face challenges in processing the many BGP routing changes that can result from a single IGP event. In fact, some vendors do not execute the BGP decision process after IGP events and instead resort to performing a periodic scan of the BGP routing table to revisit the routing decision for each destination prefix. For example, some versions of commercial routers scan the BGP routing table once every 60 seconds, introducing the possibility of long inconsistencies across routers that cause forwarding loops to persist for tens of seconds (see reference 20). The router can be configured to scan the BGP routing table more frequently, at the risk of increasing the processing load on the router.

RCP arguably faces a larger challenge from hot-potato routing changes than a conventional router, since RCP can and/or must compute BGP routes for multiple routers. Although optimizing the software would reduce the time for RCP to respond to path-cost changes, such enhancements cannot make the problem disappear entirely. Instead, we believe RCP should be used as a platform for moving beyond the artifact of hot-potato routing. In today's networks, a small IGP event can trigger a large, abrupt shift of traffic in a network (see reference 20). We would like RCP to prevent these traffic shifts from happening, except when they are necessary to avoid congestion or delay.

To explore this direction, we performed an experiment where the prototype RCP would not have to react to all internal IGP path cost changes, but only to those that impact the availability of the tunnel endpoint. We assume a backbone where RCP can freely direct an ingress router to any egress point that has a BGP route for the destination prefix, and can have this assignment persist across internal topology changes. This would be the case in a "BGP-free" core network, where internal routers do not have to run BGP, for example, an MPLS network or indeed any tunneled network. The edge routers in such a network still run BGP and therefore would still use IGP distances to select amongst different routes to the same destination. Some commercial router vendors accommodate this behavior by assigning an IGP weight to the tunnels and treating the tunnels as virtual IGP links. In the case of RCP, we need not necessarily treat the tunnels as IGP links, but would still need to assign some ranking to tunnels in order to facilitate the decision process.

We simulate this kind of environment by only considering OSPF path cost changes that would affect the availability of the egress points (or tunnel endpoints) but ignoring all changes that would only cause internal topology changes. The results for this experiment are shown with the *filtered* lines in Figures 10 and 11 respectively. From Figure 10, the 90th percentile for the decision time drops from 185 seconds when all path cost changes are processed to 0.059 seconds when the filtered path cost changes are used. Similarly, from Figure 11, the 90th percentile for the combined processing times drops from 192 seconds to 0.158 seconds when the filtered set is used. Not having to react to all path cost changes leads to a dramatic improvement on the processing times. Ignoring all path cost changes except those that would cause tunnel endpoints to disappear is clearly somewhat optimistic (e.g., a more sophisticated evaluation might also take traffic engineering goals into account), but it does show the benefit of this approach.

The results presented herein, while potentially important, do not tell the whole story. From a network-wide perspective, we ultimately want to understand how long an RCP-enabled network will take to converge after a *BGP event.* Our initial results, presented in the technical report version of this description (see reference 24), suggest that RCP convergence should be comparable to that of an iBGP route reflector hierarchy. In an iBGP topology with route reflection, convergence can actually take *longer* than with RCP in cases where routes must traverse the network multiple times before routing converges.

### 6 Conclusion

The networking research community has been struggling to fmd an effective way to redesign the Internet's routing architecture in the face of the large installed base of legacy routers and the difficulty of having a "flag day" to replace BGP. We believe that RCP provides an evolutionary path toward improving, and gradually replacing, BGP while remaining compatible with existing routers.

This description takes a potentially important first step by demonstrating that RCP is a viable alternative to the way BGP routes are distributed inside AS's today. RCP can emulate a full-mesh iBGP configuration while substantially reducing the overhead on the routers. By sending a customized routing decision to each router, RCP can avoid the problems with forwarding loops and protocol oscillations that have plagued route-reflector configurations. RCP can assign routes consistently even when the functionality is replicated and distributed. Experiments with our initial prototype implementation show that the delays for reacting to BGP events are small enough to make RCP a viable alternative to today's iBGP architectures. We also showed the performance benefit of reducing the tight coupling between IGP path cost changes and the BGP decision process.

### 7 REFERENCES

1. N. Feamster, H. Balakrishnan, J. Rexford, A. Shaikh, and J. van der Merwe, "The case for separating routing from routers," in Proc. ACM SIGCOMM Workshop on Future Directions in Network Architecture, August 2004.
2. O. Bonaventure, S. Uhlig, and B. Quoitin, "The case for more versatile BGP route reflectors." Internet Draft draft-bonaventure-bgp-route-reflectors-00.txt, July 2004.
3. D.-F. Chang, R. Govindan, and J. Heidemann, "An empirical study of router response to large BGP routing table load," in Proc. Internet Measurement Workshop, November 2002.
4. T. Bates, R. Chandra, and E. Chen, "BGP Route Reflection - An Alternative to Full Mesh IBGP." RFC 2796, April 2000.
5. R. Dube, "A comparison of scaling techniques for BGP," ACM Computer Communications Review, vol. 29, July 1999.
6. T. G. Griffin and G. Wilfong, "On the correctness of IBGP configuration," in Proc. ACM SIGCOMM, August 2002.
7. A. Basu, C.-H. L. Ong, A. Rasala, F. B. Shepherd, and G. Wilfong, "Route oscillations in IBGP with route reflection," in Proc. ACM SIGCOMM, August 2002.
8. D. McPherson, V. Gill, D. Walton, and A. Retana, "Border Gateway Protocol (BGP) Persistent Route Oscillation Condition." RFC 3345, August 2002.
9. A. Shaikh and A. Greenberg, "OSPF monitoring: Architecture, design, and deployment experience," in Proc. Networked Systems Design and Implementation, March 2004.
10. Ipsum Route Dynamics. http://www.ipsumnetworks. com/route_dynamics_overview.html.
11. Quagga Software Routing Suite. http://www.quagga.net.
12. M. Handley, O. Hudson, and E. Kohler, "XORP: An open platform for network research," in Proc. SIGCOMM Workshop on Hot Topics in Networking, October 2002.
13. E. Kohler, R. Morris, B. Chen, J. Jannotti, and M. F. Kaashoek, "The Click modular router," ACM Trans. Computer Systems, vol. 18, pp. 263ñ297, August 2000.
14. R. Govindan, C. Alaettinoglu, K. Varadhan, and D. Estrin, "Route servers for inter-domain routing," Computer Networks and ISDN Systems, vol. 30, pp. 1157ñ1174,1998.
15. R. Govindan, "Time-space tradeoffs in route-server implementation," Journal of Internetworking: Research and Experience, vol. 6, June 1995.
16. V. Jacobson, C. Alaettinoglu, and K. Poduri, "BST - BGP Scalable Transport." NANOG27 http://www.nanog.org/mtg-0302/ppt/van.pdf, February 2003.
17. N. Feamster, J. Winick, and J. Rexford, "A model of BGP routing for network engineering," in Proc. ACM SIGMETRICS, June 2004.
18. A. Feldmann, A. Greenberg, C. Lund, N. Reingold, and J. Rexford, "NetScope: Traffic engineering for IP networks," IEEE Network Magazine, pp. 11ñ19, March 2000.
19. Y. Rekhter, T. Li, and S. Hares, "A Border Gateway Protocol 4 (BGP-4)." Internet Draft draft-ietf-idr-bgp4-26.txt, work in progress, October 2004.
20. R. Teixeira, A. Shaikh, T. Griffin, and J. Rexford, "Dynamics of hot-potato routing in IP networks," in Proc. ACM SIGMETRICS, June 2004.
21. N. Feamster and H. Balakrishnan, "Detecting BGP configuration faults with static analysis," in Proc. Networked Systems Design and Implementation, May 2005.
22. J. Rexford, J. Wang, Z. Xiao, and Y. Zhang, "BGP routing stability of popular destinations," in Proc. Internet Measurement Workshop, November 2002.
23. N. Spring, R. Mahajan, and D. Wetheral, "Measuring ISP topologies with RocketFuel," in Proc. ACM SIGCOMM, August 2002.
24. M. Caesar, D. Caldwell, N. Feamster, J. Rexford, A. Shaikh, and J. van der Merwe, "Design and implementation of a routing control platform." http://www.research.att.com/~kobus/rcp-nsdi-tr.pdf, 2005.

Thus, certain exemplary embodiments comprise a method comprising a plurality of activities, comprising: for each of the plurality of routing entities in an AS: obtaining IGP topology information; learning available BGP routes associated with the routing entity; utilizing the available BGP routes and the IGP topology information for all routing entities in the AS, assigning the routing entity a customized routing decision comprising a BGP route; and sending the customized routing decision to the routing entity.

**FIG.12** is a block diagram of an exemplary embodiment of a system 12000, which can comprise a network 12100 that can communicatively couple any number of sources, such as source 12120 to any number of destinations, such as destination 12140. Network 12100 can comprise any number of Autonomous Systems (AS's), such as exemplary AS's 12220 and 12240. Each AS can comprise any number of routing entities, such as routers 12320, 12340, 12360, and 12380 in AS 12220, and routing entities 12330, 12350, and 12370 in AS 12240. Communicatively coupled to at least some of the routing entities in an AS can be a routing control platform (RCP), such as RCP's 12420 and 12440. Routing entities can be communicatively coupled by paths, such as path 12500 coupling routing entities 12320 and 12340. An aggregation of paths that lead from a source to a destination can be a potential route, such as route 12600, that a communication can follow, such as from source 12120 to destination 12140.

**FIG. 13** is a flowchart of an exemplary embodiment of a method 13000, which can be performed via a routing control platform coupled to an Autonomous System (AS) that comprises a plurality of routing entities adapted to distribute routing information about external destinations via Border Gateway Protocol (BGP).

At activity 13100, for each of the plurality of routing entities in the AS, via one or more Interior Gateway Protocol (IGP) sessions with the routing entity, an IGP adjacency to the routing entity can be established. At activity 13200, for each of the plurality of routing entities in the AS, via the one or more Interior Gateway Protocol (IGP) sessions with the routing entity, link state advertisements can be received from the routing entity. At activity 13300, for each ofthe plurality of routing entities in the AS, via the one or more Interior Gateway Protocol (IGP) sessions with the routing entity, IGP topology information can be maintained. At activity 13400, for each of the plurality of routing entities in the AS, via one or more Internal Border Gateway Protocol (IBGP) sessions with the routing entity, available BGP routes associated with the routing entity can be learned in real-time. At activity 13500, pair-wise shortest paths for all routing entities in the AS can be computed. At activity 13600, based on the computer pair-wise shortest paths, for each routing entity in the AS, a closest egress routing entity can be determined. At activity 13700, utilizing the available BGP routes and the IGP topology information for all routing entities in the AS, for each destination prefix and each routing entity, the routing entity can be assigned a customized routing decision comprising a BGP route. At activity 13800, for each destination prefix and each routing entity, the customized routing decision can be sent to the routing entity via IBGP. At activity 13900, for one or more selected routing entities, the assigned BGP route can shift predetermined traffic to a predetermined and/or alternative destination.

**FIG. 14** is a block diagram of an exemplary embodiment of an information device 14000, which in certain operative embodiments can comprise, for example, server routing entity 12320, RCP 12420, and/or source 12120 of **FIG. 12.** Information device 14000 can comprise any of numerous components, such as for example, one or more network interfaces 14100, one or more processors 14200, one or more memories 14300 containing instructions 14400, one or more input/output (I/O) devices 14500, and/or one or more user interfaces 14600 coupled to I/O device 14500, etc.

In certain exemplary embodiments, via one or more user interfaces 14600, such as a graphical user interface, a user and/or operator can view a rendering of information related to specifying, designing, configuring, simulating, operating, maintaining, restoring, and/or managing, etc., one or more RCP's, AS's, and/or networks.

Incorporated by reference herein in its entirety is United States Patent Application Serial Number 11/019845, filed 22 December 2004.

### Definitions

When the following terms are used substantively herein, the accompanying definitions apply:

**a** - at least one.

**activity** - an

**activity** - an action, act, step, and/or process or portion thereof

**adapted to** - made suitable or fit for a specific use or situation.

**adjacency** - a relationship formed between selected neighboring routing entities and/or end nodes for the purpose of exchanging routing information.

**alternative** - a substitute and/or different entity.

**apparatus** - an appliance or device for a particular purpose

**assign** - to designate, appoint, allot, and/or attribute.

**associated** - related.

**Autonomous System (AS) -** a BGP routing domain and/or those BGP routing entities under a single point of administrative control.

**available BGP route** - a potential and functional path involving routing entities that utilize BGP.

**Border Gateway Protocol (BGP)** - a gateway path vector protocol used to exchange routing information within and/or between domains.

**can -** is capable of, in at least some embodiments.

**closest egress routing entity -** a routing entity that has both the shortest path to a given routing entity and is adjacent to a neighboring AS through which a communication can pass to reach its destination.

**comprising -** including but not limited to.

**compute -** to calculate, estimate, determine, and/or ascertain via a processor.

**couple** - to join, connect, and/or link together.

**customized** - unique.

**data** - distinct pieces of information, usually formatted in a special or predetermined way and/or organized to express concepts.

**define -** to establish the outline, form, or structure of.

**destination -** an intended end-point for a communication that traverses a network.

**destination prefix ―** an address of an end network to which a destination is coupled.

**determine -** to ascertain, obtain, and/or calculate.

**device -** a machine, manufacture, and/or collection thereof.

**distribute -** to disseminate, broadcast, and/or communicate to multiple receivers.

**domain -** a group of computers and/or devices on a communications network that are administered as a unit with at least some common rules and/or procedures and share at least a portion of a common name and/or communications address. Within the Internet, domains can be defined by the IP address, such that all devices sharing a common part of the IP address are said to be in the same domain.

**emulate -** to imitate the function of.

**establish -** to create, form, and/or set-up.

**external destination -** a destination outside an AS.

**full-mesh IBGP configuration -** an arrangement of intra-AS BGP routing entities such that every one of said entities has a physical and/or logical circuit connecting it to every other one of said entities.

**haptic** - involving the human sense of kinesthetic movement and/or the human sense of touch. Among the many potential haptic experiences are numerous sensations, body-positional differences in sensations, and time-based changes in sensations that are perceived at least partially in non-visual, non-audible, and non-olfactory manners, including the experiences of tactile touch (being touched), active touch, grasping, pressure, friction, traction, slip, stretch, force, torque, impact, puncture, vibration, motion, acceleration, jerk, pulse, orientation, limb position, gravity, texture, gap, recess, viscosity, pain, itch, moisture, temperature, thermal conductivity, and thermal capacity.

**information device** - any device capable of processing information, such as any general purpose and/or special purpose computer, such as a personal computer, workstation, server, minicomputer, mainframe, supercomputer, computer terminal, laptop, wearable computer, and/or Personal Digital Assistant (PDA), mobile terminal, Bluetooth device, communicator, "smart" phone (such as a Treo-like device), messaging service (e.g., Blackberry) receiver, pager, facsimile, cellular telephone, a traditional telephone, telephonic device, a programmed microprocessor or microcontroller and/or peripheral integrated circuit elements, an ASIC or other integrated circuit, a hardware electronic logic circuit such as a discrete element circuit, and/or a programmable logic device such as a PLD, PLA, FPGA, or PAL, or the like, etc. In general any device on which resides a fmite state machine capable of implementing at least a portion of a method, structure, and/or or graphical user interface described herein may be used as an information device. An information device can comprise components such as one or more network interfaces, one or more processors, one or more memories containing instructions, and/or one or more input/output (I/O) devices, one or more user interfaces coupled to an I/O device, etc.

**input/output (I/O) device** - any sensory-oriented input and/or output device, such as an audio, visual, haptic, olfactory, and/or taste-oriented device, including, for example, a monitor, display, projector, overhead display, keyboard, keypad, mouse, trackball, joystick, gamepad, wheel, touchpad, touch panel, pointing device, microphone, speaker, video camera, camera, scanner, printer, haptic device, vibrator, tactile simulator, and/or tactile pad, potentially including a port to which an I/O device can be attached or connected.

**instructions** - directions adapted to perform a particular operation or function.

**inter-AS** - between administrative routing domains.

**Interior Gateway Protocol (IGP)** - a protocol used to exchange routing information between collaborating routing entities in the Internet. Examples include RIP and OSPF.

**Internal Border Gateway Protocol (IBGP)** - a gateway path vector protocol used to exchange routing information within domains.

**learn -** to gain, receive, acquire, and/or obtain information.

**link** - a communication channel between a pair of switching devices.

**link** - a physical and/or logical communication channel between a pair of routing entities.

**link state advertisement -** a routing and/or service update comprising information regarding an aspect and/or status of a link and sent at specified time so that other routers on a network can maintain lists of usable links and/or routes.

**loading** - intensity of traffic flow.

**machine instructions** - directions adapted to cause a machine to perform a particular operation or function.

**machine readable medium** - a physical structure from which a machine can obtain data and/or information. Examples include a memory, memory device, punch cards, bar code, etc.

**maintain** - to retain, preserve, sustain, and/or continue to obtain.

**may -** is allowed to, in at least some embodiments.

**memory device -** an apparatus capable of storing analog or digital information, such as instructions and/or data. Examples include a nonvolatile memory, volatile memory, Random Access Memory, RAM, Read Only Memory, ROM, flash memory, magnetic media, a hard disk, a floppy disk, a magnetic tape, an optical media, an optical disk, a compact disk, a CD, a digital versatile disk, a DVD, and/or a raid array, etc. The memory device can be coupled to a processor and/or can store instructions adapted to be executed by processor, such as according to an embodiment disclosed herein.

**method** - a process, procedure, and/or collection of related activities for accomplishing something.

**neighboring** - separated by no more than one link and/or hop.

**network** - a communicatively coupled plurality of nodes.

**network interface** - any device, system, or subsystem capable of coupling an information device to a network. For example, a network interface can be a telephone, cellular phone, cellular modem, telephone data modem, fax modem, wireless transceiver, Ethernet card, cable modem, digital subscriber line interface, bridge, hub, router, or other similar device.

**network size** - a measure of a number of nodes and/or links in a network.

**pair-wise shortest path** - the path between two designated routing entities that has the lowest aggregate link cost..

**plurality -** the state of being plural and/or more than one.

**predetermined -** established in advance.

**processor -** a device and/or set of machine-readable instructions for performing one or more predetermined tasks. A processor can comprise any one or a combination of hardware, firmware, and/or software. A processor can utilize mechanical, pneumatic, hydraulic, electrical, magnetic, optical, informational, chemical, and/or biological principles, signals, and/or inputs to perform the task(s). In certain embodiments, a processor can act upon information by manipulating, analyzing, modifying, converting, transmitting the information for use by an executable procedure and/or an information device, and/or routing the information to an output device. A processor can function as a central processing unit, local controller, remote controller, parallel controller, and/or distributed controller, etc. Unless stated otherwise, the processor can be a general-purpose device, such as a microcontroller and/or a microprocessor, such the Pentium IV series of microprocessor manufactured by the Intel Corporation of Santa Clara, California. In certain embodiments, the processor can be dedicated purpose device, such as an Application Specific Integrated Circuit (ASIC) or a Field Programmable Gate Array (FPGA) that has been designed to implement in its hardware and/or firmware at least a part of an embodiment disclosed herein.

**real-time -** an ability to process data immediately upon receipt. Contrast with batch processing.

**receive -** to obtain, get, take, and/or acquire.

**render -** make perceptible to a human, for example as data, commands, text, graphics, audio, video, animation, and/or hyperlinks, etc., such as via any visual, audio, and/or haptic means, such as via a display, monitor, electric paper, ocular implant, cochlear implant, speaker, etc.

**repeatedly** - again and again; repetitively.

**route ―** a path along which information, such as packets, can be sent.

**routing control platform** - a system comprising hardware and/or software, the system logically centralized, separate from the IP forwarding plane, and adapted to perform route selection on behalf of routing entities and communicates selected routes to the routing entities using the unmodified IBGP protocol.

**routing decision -** a conclusion, judgment, and/or selection of a route and/or route information.

**routing entity** - a device adapted to direct traffic. Examples include a router, route-reflector, route server, server-based router, router-switch, sets of routers, and/or intra-networking devices, etc. A typical router operates at least at the bottom 3 layers (Physical, Link, and Network layers) of the OSI model.

**routing information -** routes and/or metrics associated with routes to particular network destinations.

**select** - to choose.

**send** - to convey, dispatch, and/or transmit.

**session** - an active communication between devices and/or applications over a network.

**set** - a related plurality.

**shift** - to re-direct, move, and/or transfer.

**shortest path -** the path between a source and a destination that has the lowest aggregate link cost.

**store** - to place, hold, and/or retain data, typically in a memory.

**substantially -** to a great extent or degree.

**system** - a collection of mechanisms, devices, data, and/or instructions, the collection designed to perform one or more specific functions.

**topology information** - information regarding the physical and/or logical configuration of a communication network.

**traffic ―** a flow of bits, packets, datagrams, calls, and/or messages.

**user interface** - any device for rendering information to a user and/or requesting information from the user. A user interface includes at least one of textual, graphical, audio, video, animation, and/or haptic elements. A textual element can be provided, for example, by a printer, monitor, display, projector, etc. A graphical element can be provided, for example, via a monitor, display, projector, and/or visual indication device, such as a light, flag, beacon, etc. An audio element can be provided, for example, via a speaker, microphone, and/or other sound generating and/or receiving device. A video element or animation element can be provided, for example, via a monitor, display, projector, and/or other visual device. A haptic element can be provided, for example, via a very low frequency speaker, vibrator, tactile stimulator, tactile pad, simulator, keyboard, keypad, mouse, trackball, joystick, gamepad, wheel, touchpad, touch panel, pointing device, and/or other haptic device, etc. A user interface can include one or more textual elements such as, for example, one or more letters, number, symbols, etc. A user interface can include one or more graphical elements such as, for example, an image, photograph, drawing, icon, window, title bar, panel, sheet, tab, drawer, matrix, table, form, calendar, outline view, frame, dialog box, static text, text box, list, pick list, pop-up list, pull-down list, menu, tool bar, dock, check box, radio button, hyperlink, browser, button, control, palette, preview panel, color wheel, dial, slider, scroll bar, cursor, status bar, stepper, and/or progress indicator, etc. A textual and/or graphical element can be used for selecting, programming, adjusting, changing, specifying, etc. an appearance, background color, background style, border style, border thickness, foreground color, font, font style, font size, alignment, line spacing, indent, maximum data length, validation, query, cursor type, pointer type, autosizing, position, and/or dimension, etc. A user interface can include one or more audio elements such as, for example, a volume control, pitch control, speed control, voice selector, and/or one or more elements for controlling audio play, speed, pause, fast forward, reverse, etc. A user interface can include one or more video elements such as, for example, elements controlling video play, speed, pause, fast forward, reverse, zoom-in, zoom-out, rotate, and/or tilt, etc. A user interface can include one or more animation elements such as, for example, elements controlling animation play, pause, fast forward, reverse, zoom-in, zoom-out, rotate, tilt, color, intensity, speed, frequency, appearance, etc. A user interface can include one or more haptic elements such as, for example, elements utilizing tactile stimulus, force, pressure, vibration, motion, displacement, temperature, etc.

**utilize** - to use and/or put into service.

**via** - by way of and/or utilizing.

Still other embodiments will become readily apparent to those skilled in this art from reading the above-recited detailed description and drawings of certain exemplary embodiments. It should be understood that numerous variations, modifications, and additional embodiments are possible, and accordingly, all such variations, modifications, and embodiments are to be regarded as being within the spirit and scope of this application. For example, regardless of the content of any portion (e.g., title, field, background, summary, abstract, drawing figure, etc.) of this application, unless clearly specified to the contrary, such as via an explicit definition, there is no requirement for the inclusion in any claim herein (or of any claim of any application claiming priority hereto) of any particular described or illustrated characteristic, function, activity, or element, any particular sequence of activities, or any particular interrelationship of elements. Moreover, any activity can be repeated, any activity can be performed by multiple entities, and/or any element can be duplicated. Further, any activity or element can be excluded, the sequence of activities can vary, and/or the interrelationship of elements can vary. Accordingly, the descriptions and drawings are to be regarded as illustrative in nature, and not as restrictive. Moreover, when any number or range is described herein, unless clearly stated otherwise, that number or range is approximate. When any range is described herein, unless clearly stated otherwise, that range includes all values therein and all subranges therein. Any information in any material (e.g., a United States patent, United States patent application, book, article, etc.) that has been incorporated by reference herein, is only incorporated by reference to the extent that no conflict exists between such information and the other statements and drawings set forth herein. In the event of such conflict, including a conflict that would render invalid any claim herein or seeking priority hereto, then any such conflicting information in such incorporated by reference material is specifically not incorporated by reference herein.

## Claims

1. A method comprising a plurality of activities, comprising:
via a routing control platform coupled to an Autonomous System (AS) that comprises a plurality of routing entities adapted to distribute routing information about external destinations via Border Gateway Protocol (BGP):
for each of the plurality of routing entities in the AS:
via one or more Interior Gateway Protocol (IGP) sessions with the routing entity:
establishing an IGP adjacency to the routing entity;
receiving link state advertisements from the routing entity; and
maintaining IGP topology information;
via one or more Internal Border Gateway Protocol (IBGP) sessions with the routing entity, learning available BGP routes associated with the routing entity in real-time;
computing pair-wise shortest paths for all routing entities in the AS;
based on the computer pair-wise shortest paths, determining, for each routing entity in the AS, a closest egress routing entity;
utilizing the available BGP routes and the IGP topology information for all routing entities in the AS, for each destination prefix and each routing entity, assigning the routing entity a customized routing decision comprising a BGP route; and
for each destination prefix and each routing entity, sending the customized routing decision to the routing entity via IBGP.

2. A method comprising a plurality of activities, comprising:
via a routing control platform coupled to an Autonomous System (AS) that comprises a plurality of routing entities adapted to distribute routing information about external destinations via Border Gateway Protocol (BGP):
for each of the plurality of routing entities in the AS:
obtaining IGP topology information; and
learning available BGP routes associated with the routing entity;
utilizing the available BGP routes and the IGP topology information for all routing entities in the AS, for each destination prefix and each routing entity, assigning the routing entity a customized routing decision comprising a BGP route; and
for each destination prefix and each routing entity, sending the customized routing decision to the routing entity.

3. The method of claim 2, further comprising:
for each of the plurality of routing entities in the AS, establishing an IGP adjacency to the routing entity.

4. The method of claim 2, further comprising:
for each of the plurality of routing entities in the AS, via one or more Interior Gateway Protocol (IGP) sessions with the routing entity, establishing an IGP adjacency to the routing entity.

5. The method of claim 2, further comprising:
for each of the plurality of routing entities in the AS, receiving link state advertisements from the routing entity.

6. The method of claim 2, further comprising:
for each of the plurality of routing entities in the AS, via one or more Interior Gateway Protocol (IGP) sessions with the routing entity, receiving link state advertisements from the routing entity.

7. The method of claim 2, further comprising:
maintaining the IGP topology information.

8. The method of claim 2, further comprising:
maintaining the IGP topology information for each of the plurality of routing entities in the AS.

9. The method of claim 2, wherein:
the available BGP routes are learned in real-time.

10. The method of claim 2, wherein:
for each of the plurality of routing entities in the AS, the available BGP routes are learned via one or more Internal Border Gateway Protocol (IBGP) sessions with the routing entity.

11. The method of claim 2, further comprising:
computing pair-wise shortest paths for all routing entities in the AS.

12. The method of claim 2, further comprising:
for each routing entity in the AS, determining a closest egress routing entity.

13. The method of claim 2, further comprising:
for each routing entity in the AS, determining a closest egress routing entity based on one or more pair-wise shortest paths.

14. The method of claim 2, further comprising:
utilizing the available BGP routes and the IGP topology information for all routing entities in the AS, for each destination prefix and each routing entity, deciding a BGP route.

15. The method of claim 2, further comprising:
utilizing the available BGP routes and the IGP topology information for all routing entities in the AS, for each destination prefix and each routing entity, deciding a BGP route that the routing entity would have selected in a full-mesh IBGP configuration.

16. The method of claim 2, further comprising:
emulating a full-mesh IBGP configuration for the AS.

17. The method of claim 2, wherein, for one or more selected routing entities, the BGP route shifts traffic based on link loading.

18. The method of claim 2, wherein, for one or more selected routing entities, the assigned BGP route shifts predetermined traffic to a predetermined destination.

19. The method of claim 2, wherein, for one or more selected destinations, the assigned BGP route shifts predetermined traffic to an alternative destination.

20. The method of claim 2, wherein:
the customized routing decision is sent via IBGP.

21. The method of claim 2, wherein:
for each routing entity in the AS, a count of IBGP sessions at the routing entity is independent of network size.

22. The method of claim 2, further comprising:
communicating inter-AS routing information with a neighboring AS.

23. The method of claim 2, wherein:
said plurality of activities are initiated without any implementation changes to said plurality of routing entities in the AS.

24. A machine-readable medium storing machine instructions for a plurality of activities, comprising:
via a routing control platform coupled to an Autonomous System (AS) that comprises a plurality of routing entities adapted to distribute routing information about external destinations via Border Gateway Protocol (BGP):
for each of the plurality of routing entities in the AS:
obtaining IGP topology information; and
learning available BGP routes associated with the routing entity;
utilizing the available BGP routes and the IGP topology information for all routing entities in the AS, for each destination prefix and each routing entity, assigning the routing entity a customized routing decision comprising a BGP route; and
for each destination prefix and each routing entity, sending the customized routing decision to the routing entity.
